# FASCICULE DE BREVET EUROPEEN

(11) **EP 1 791 741 B1**
(45) Date de publication et mention de la délivrance du brevet: **23.12.2009**
(21) Numéro de dépôt: 05781817.1
(22) Date de dépôt: 28.06.2005
(51) Int. Cl.: B60T 11/26

(54) **RESERVOIR DE LIQUIDE DE FREIN POUR VEHICULE AUTOMOBILE**
BREMSFLÜSSIGKEITSBEHÄLTER FÜR EIN KRAFTFAHRZEUG
BRAKE FLUID RESERVOIR FOR A MOTOR VEHICLE

(30) Priorité: 06.09.2004 FR 0409426
(43) Date de publication de la demande: 06.06.2007
(73) Titulaire: RENAULT S.A.S., 92100 Boulogne Billancourt (FR)
(72) Inventeur: DOMAS, Régis, F-78180 MONTIGNY LE BRETONNEUX (FR)
(74) Mandataire: Guyon, Rodolphe C.
(86) Numéro de dépôt international: PCT/FR2005/050510
(87) Numéro de publication internationale: WO 2006/027505

(56) Documents cités:
- EP-A- 1 142 769
- DE-A1- 3 626 333
- FR-A- 2 851 215
- US-A- 6 105 611

## Description

La présente invention concerne un réservoir de liquide de frein pour véhicule automobile, et plus particulièrement un réservoir de liquide de frein pour véhicule automobile, formé d'une partie inférieure et d'une partie supérieure soudées l'une à l'autre et comportant chacune au moins une nervure interne, la partie inférieure du réservoir étant monté sur le maître cylindre d'un système de freinage, ce réservoir comprenant un orifice de remplissage par lequel du liquide peut être inséré, ce liquide s'étendant d'une part dans une première et une deuxième chambre de rétention du réservoir qui communiquent entre elles et d'autre part dans une pipette d'alimentation propre à chaque chambre de rétention et dirigée vers le maître cylindre.

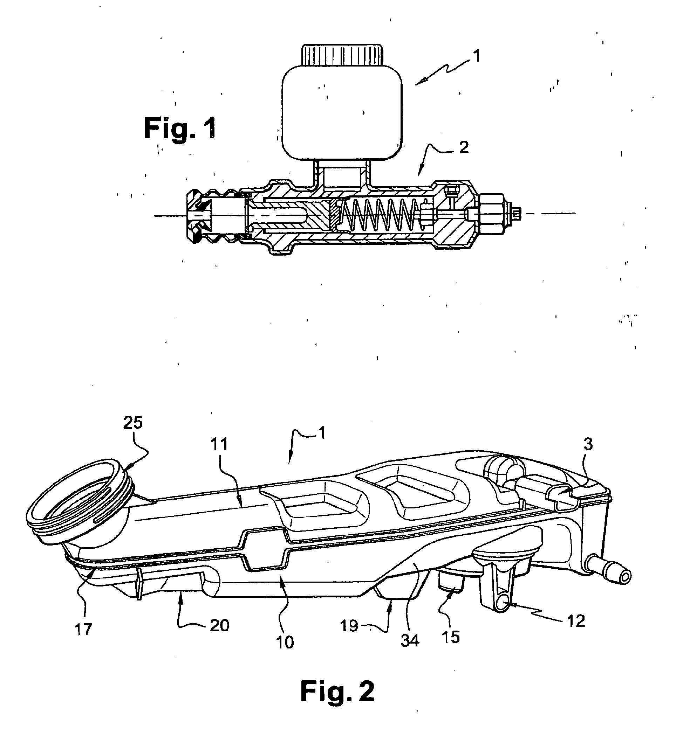

Un tel réservoir contient du liquide de frein qui est transféré dans un maître cylindre avant d'être mis en circulation dans les différents tuyaux de freinage vers les organes de freinage comme par exemple les freins associés aux roues. Il est classiquement disposé au dessus du maître cylindre et ne s'étend pas vers l'avant au-delà de l'extrémité de ce maître-cylindre, de sorte que, tel que représenté à la figure 1, ce réservoir puisse être accessible par le haut pour faciliter le remplissage de liquide de frein.

Dans le cadre d'une évolution des véhicules vers des architectures comprenant un pare-brise avancé vers l'avant, pour offrir une visibilité et une habitabilité accrues aux utilisateurs, la position avancée de la structure sous baie, qui supporte cette extrémité avancée du pare-brise, et la disposition du réservoir vue précédemment posent un problème concernant l'accessibilité des moyens de remplissage de liquide de frein.

Le document FR2851215 représente l'art antérieur le plus proche est divulgue un réservoir avec les caractéristiques techniques du préambule de la revendication 1.

L'objet de la présente invention est de proposer un réservoir de liquide de frein qui puisse être appliqué dans ce type de véhicule, en s'intégrant dans le compartiment moteur sans créer d'interférence avec l'ensemble des éléments fonctionnels de ce compartiment, et dont le remplissage soit aisé.

Un second objectif de l'invention est de proposer un réservoir de liquide de frein qui permette une absorption optimale des efforts lors d'un choc piéton dans lequel le piéton vient être basculé sur le capot du véhicule.

En réponse à des objectifs que l'on retrouve invariablement chez les différents constructeurs automobiles, la présente invention se veut également peu coûteuse et peu encombrante.

Pour répondre à ces objectifs, l'invention propose un réservoir de liquide de frein du type précédemment décrit, **caractérisé en ce que** le réservoir présente une forme sensiblement allongée dont l'extrémité portant l'orifice de remplissage est située en porte à faux du maître cylindre, et en ce que les nervures internes, après l'assemblage des deux parties, forment au moins un canal de remplissage qui s'étend sensiblement horizontalement de l'orifice de remplissage vers la première chambre de rétention.

Selon différentes caractéristiques de la présente invention :
- le fond du canal de remplissage est situé à une hauteur supérieure à la hauteur du fond de la première chambre de rétention, de sorte que le liquide présent dans la première chambre de rétention ne peut circuler dans le canal.
- le passage aménagé entre le canal et la première chambre de rétention est orienté transversalement.
- le canal de remplissage présente un angle d'inclinaison par rapport à l'horizontal, de sorte que ce canal soit horizontal lorsque le réservoir est monté sur le véhicule légèrement incliné.
- les nervures internes forment, après l'assemblages des partiels inférieures et supérieures du réservoir, au moins une cloison anti-mouvements dans chaque chambre de rétention, apte à adoucir la force des mouvements de fluide.
- l'orifice de remplissage est réalisé sur la partie supérieure, et en ce qu'une butée de remplissage est réalisée sur la partie inférieure en regard de cet orifice.
- le point de contact entre un élément de pompage externe du liquide et la butée de remplissage est sensiblement au même niveau que l'extrémité du canal de remplissage débouchant sur la première chambre de rétention.
- des moyens de renfort sont placés entre le réservoir et le maître cylindre.
- les moyens de renfort comprennent des nervures réalisées sous la partie inférieure du réservoir.
- la longueur du réservoir en porte à faux par rapport au maître cylindre est telle que le support moteur est accessible.
- l'orifice de remplissage est muni d'un goulot et d'un bouchon, ce goulot et ce bouchon présentant des dimensions telles que le capot avant peut s'affaisser sans contraintes lors d'un choc piéton.

L'invention vise à protéger également un véhicule automobile, qui comporte un réservoir tel qu'évoqué ci dessus.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un réservoir de liquide de frein selon l'état de la technique,
- la figure 2 est une représentation schématique d'un réservoir selon l'invention,
- la figure 3 est une représentation schématique du réservoir de la figure 2 et du maître cylindre associé,
- la figure 4 est une vue éclatée des deux parties formant le réservoir des figures 2 et 3,
- la figure 5 est une vue en perspective de la partie inférieure représentée à la figure 4,
- la figure 6 est une vue en coupe du réservoir et du maître cylindre tels que représentés à la figure 3.

Tel que représenté aux figures 2 à 6, un réservoir de liquide de frein 1 selon l'invention est formé de deux parties 10 et 11 moulées indépendamment puis soudées afin de former un réservoir creux. Ce réservoir 1 est disposé au dessus du maître cylindre 2, la partie inférieure 10 du réservoir 1 étant munie d'au moins deux pattes 12 permettant la fixation de ce réservoir 1 sur le maître cylindre 2.

L'intérieur du réservoir 1 présente une première 13 et une deuxième chambre de rétention 14, dans lesquelles du liquide de frein est inséré. Chaque chambre est munie d'une pipette d'alimentation 15 et 16 qui permet le passage de ce fluide vers le maître cylindre 2. Le liquide dé frein se répand dans l'ensemble du système de freinage, composé au moins du réservoir 1, du maître cylindre 2, des circuits de freinage et des organes de freinage non représentés, par exemple les freins associés aux roues. De façon réglementaire, une chambre de rétention 13 et une pipette 15 associée correspondent au circuit de freinage du frein avant gauche et du frein arrière droit du véhicule, l'autre chambre 14 et sa pipette 16 associée correspondant au circuit de freinage de l'autre diagonale des freins. Une fuite dans l'un des circuits de freinage se répercute alors par une baisse de,niveau du liquide dans la chambre de rétention correspondante. Afin d'assurer une présence permanente d'un bon niveau de liquide de frein, des niveaux maximum et minimum sont visibles depuis l'extérieur du réservoir 1. De plus, le réservoir 1 est muni d'un capteur de niveau 3 de liquide de frein. Ce capteur 3 consiste en un flotteur couplé à un organe électronique chargé d'informer l'unité de commande électronique du véhicule sur le niveau du liquide de frein dans le réservoir 1. Avantageusement, ce capteur est situé entre les pipettes d'alimentation 15 et 16 et envoie une alarme lorsque le niveau dans lequel baigne le flotteur correspond au niveau minimum autorisé de liquide ou lorsqu'il est inférieur à ce niveau minimum.

Le réservoir 1 présente une forme sensiblement allongée, dont l'extrémité avant 17 est munie d'un orifice de remplissage 18 apte à coopérer avec un pistolet de remplissage 4. Les dimensions du réservoir 1 et du maître cylindre 2, dont les figures ne sont qu'un exemple non limitatif, sont telles que sensiblement la moitié du réservoir 1 est en porte à faux par rapport au maître cylindre 2. Dans ce contexte, des nervures d'appui 19 sont réalisées sous la partie inférieure 10 du réservoir 1 afin de prendre appui sur le maître cylindre 2 et prolonger ainsi la liaison entre le réservoir 1 et le maître cylindre 2. De la sorte, les efforts de flexion, dus à la position en porte à faux du réservoir 1 par rapport au maître cylindre 2, sont limités. De plus, une nervure de renfort 20 est réalisée sur la face externe de la partie inférieure, au niveau de l'extrémité en porte à faux du réservoir et de la zone de remplissage.

Tel qu'évoqué précédemment, la partie inférieure 10 et la partie supérieure 11 du réservoir 1 sont moulées indépendamment et présentent chacune des nervures internes de renfort 21. Ces nervures 21 assurent ainsi une bonne tenue du réservoir 1 lorsque les deux parties inférieures 10 et supérieures 11 sont soudées l'une à l'autre. Certaines nervures internes de renfort 21 forment, de façon connue à l'intérieur du réservoir 1, lorsque les deux parties sont réunies en une pièce unique, deux chambres de rétention 13 et 14 qui communiquent entre elles par l'intermédiaire d'une rainure 22. La hauteur de cette rainure 22 depuis le fond de la partie inférieure 10 du réservoir 1 correspond au niveau minimum conseillé de liquide dans le réservoir 1.

Selon l'invention, les nervures internes de renfort 21 distinctes de celles formant les deux chambres de rétention 13 et 14 forment des cloisons anti-mouvements 23 disposées à l'intérieur de chacune des chambres de rétention 13 et 14. Une telle conception permet de garantir un bon fonctionnement du réservoir 1 dans toutes les conditions d'utilisation. En particulier pendant le roulage du véhicule, qui soumet le liquide de frein à des mouvements dans le réservoir 1, le risque de déjaugeage du liquide de frein au niveau des pipettes d'alimentation 15 et 16 est limité, de même que le risque d'allumage intempestif du témoin d'alerte lié au capteur 3. Les nervures internes 21 formant les cloisons 23 à l'intérieur des chambres de rétention 13 et 14 atténuent la force des déplacements du liquide dans le réservoir 1. De plus, lors du transport en sortie d'usine des véhicules sur des camions, pendant lesquels les véhicules sont arrimés avec une inclinaison pouvant aller jusqu'à trente degrés, un tel système de chambres de rétention 13 et 14, couplé avec la formation dans' le réservoir d'un canal de remplissage 24 qui s'étend depuis l'orifice de remplissage 18 vers au moins la première chambre de rétention 13, permet de limiter le risque de fuite au niveau du goulot de remplissage 25 du à l'inclinaison du véhicule.

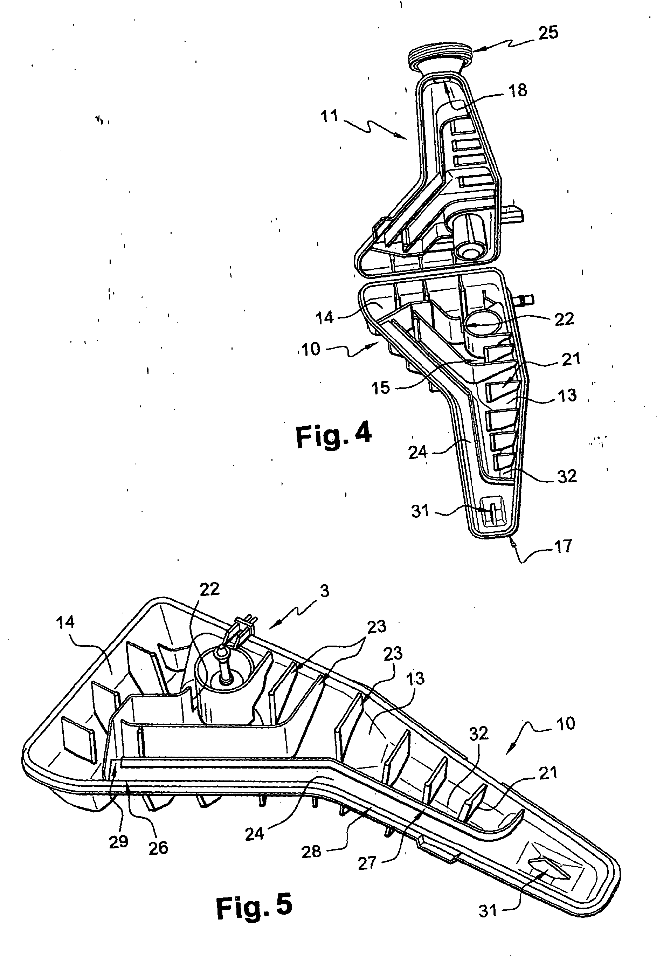

Selon la présente invention, le canal de remplissage 24 s'étend sensiblement horizontalement de l'orifice de remplissage 18 vers la première chambre de rétention 13, l'extrémité 26 du canal 24 débouchant par une ouverture 29 sur la première chambre de rétention 13. Ce canal 24 est délimité latéralement par deux nervures internes de renfort 27 et 28 et présente une profondeur moins grande que la profondeur de la première chambre de rétention 13. Il existe ainsi une marche entre le canal de remplissage 24 et la première chambre de rétention 13, de sorte que le liquide se déverse facilement du canal 24 vers la chambre 13 lors du remplissage du liquide. A l'inverse, lors du roulage du véhicule, le liquide ne revient pas dans le canal de remplissage 24. Avantageusement, tel que représenté aux figures 4 et 5, le passage entre le canal 24 et la première chambre 13 est une ouverture 29 orientée transversalement, de sorte que le liquide ne soit pas dirigé directement vers ce passage 29 lors de freinages ou accélérations induisant un déplacement d'arrière en avant du liquide dans le réservoir 1.

Il est à noter que sur les différentes figures, une seule disposition des nervures internes de renfort 21 à l'intérieur du réservoir 1 est représentée, et donc qu'une seule disposition des chambres de rétention 13 et 14 et du canal de remplissage 24 est représentée. Il sera compris que si le canal de remplissage 24 doit être un lien entre l'orifice de remplissage 18 et la première chambre de rétention 13, pour que le liquide puisse passer du canal 24 vers les chambres 13 et 14 par l'intermédiaire d'au moins le passage 29 à l'extrémité 26 du canal 24, une orientation différentes des nervures 21 et du canal de remplissage 24 peut être appliqué sans sortir du contexte de l'invention. A titre d'exemple, le canal de remplissage 24 pourrait être situé au centre du réservoir 1 et déboucher latéralement sur une première chambre de rétention 13. Il s'agit alors de réaliser le moulage de la partie inférieure 10 du réservoir 1 de sorte qu'un conduit 24 de plus faible profondeur traverse le réservoir 1 en son centre, et de réaliser la partie supérieure 11 de sorte que des nervures 27 et 28 correspondent, au centre du réservoir 1, aux délimitations latérales du canal de remplissage 24.

Tel que représenté sur les figures 2, 3, 4 et 6, un orifice de remplissage 18 est formé dans la partie supérieure 11 du réservoir 1. L'orifice 18 et le bouchon de remplissage 30 associé présentent une inclinaison et des dimensions qui permettent un positionnement sous la ligne de choc piéton, qui représente la valeur de descente que doit subir le capot pour absorber l'énergie du choc piéton. Pour des raisons de tenue du réservoir 1, la partie inférieure 10 est agencée au niveau de cet orifice de remplissage 18 pour présenter un décrochage vertical 31 vers le bas, afin de compenser la perte de hauteur du goulot de remplissage 25 et d'assurer ainsi verticalement une tenue suffisante de l'extrémité avant 17 du réservoir 1.

En regard de cet orifice 18, une butée de remplissage 31 est formée sur la face interne 32 de la partie inférieure 10 du réservoir 1. Cette butée 31 présente une forme compatible avec un élément de pompage 33 propre au pistolet de remplissage 4 du liquide. Le remplissage s'effectue de la façon suivante : tout d'abord, le liquide de frein se répand dans l'ensemble du système de freinage et en final dans le réservoir 1. Le remplissage s'effectue jusqu'à ce que du liquide de frein atteigne le pistolet de remplissage 4 et qu'un clapet anti-retour par exemple arrête l'arrivée de liquide. Il est alors procédé à un pompage du liquide excédentaire afin d'arriver à un niveau de liquide correspondant au niveau maximum autorisé.

L'élément de pompage 33 vient au contact de la butée de remplissage 31 et la dimension de la butée 31, en particulier sa hauteur, est calculée pour que l'arrêt de la mise à niveau corresponde au niveau maximum de liquide autorisé dans le réservoir 1. De manière avantageuse, le point de contact entre l'élément de pompage 33 et cette butée 31 est sensiblement au même niveau que l'ouverture 29 débouchant à l'extrémité 26 du canal de remplissage 24 sur la première chambre de rétention 13. Ceci permet de garantir un niveau maximum de liquide de frein homogène dans l'ensemble du réservoir 1.

Afin de garantir un niveau maximum de liquide de frein au véhicule en sortie de sa chaîne de fabrication, il a été nécessaire de créer un temps de mise à niveau, c'est-à-dire de pompage du liquide excédentaire, plus long lors de l'opération de remplissage que pour des véhicules présentant un réservoir classique, moins allongé et donc sans canal de remplissage 24. En effet, lors de l'aspiration du trop plein de liquide dans le réservoir 1, l'inertie importante du liquide de frein due à la longueur du canal de remplissage 24, et à la différence de hauteur entre le fond de la première chambre de rétention 13 et le fond du canal de remplissage 24, entraîne un temps de cycle rallongé par rapport aux versions classiques.

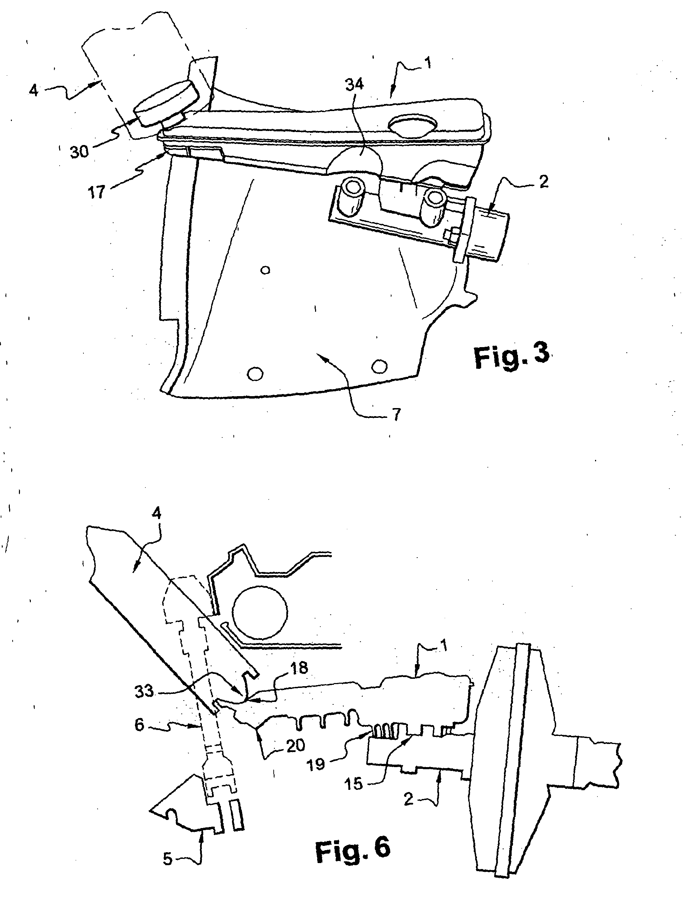

Tel que représenté sur les figures 3 et 6, la longueur du réservoir 1 en porte à faux par rapport au maître cylindre 2 est calculée pour qu'elle soit d'une part suffisante pour qu'un utilisateur accède au goulot de remplissage 25 avec un pistolet de remplissage 4, et que d'autre part ce même utilisateur puisse faire accéder des moyens d'outillage 6, représentés en pointillés sur la figure 6, à différents éléments situés en partie basse du bloc avant du véhicule, et notamment le support moteur 5.

Un réservoir 1 selon l'invention présente ainsi les avantages multiples de permettre le remplissage dans de bonnes conditions, de résister à la flexion malgré une position en porte à faux par rapport au maître cylindre 2 et de s'intégrer dans le compartiment moteur sans créer d'interférence avec l'ensemble des éléments fonctionnels de ce compartiment. Concernant ce dernier point, il est à noter que le réservoir 1 peut présenter une forme extérieure adaptée pour permettre le passage d'outils ou pour permettre la mise en place du réservoir 1. Ainsi, la partie inférieure 10 du réservoir 1 peut présenter sur le côté un plan incliné 34 pour permettre le passage d'une visseuse vers le maître cylindre 2. De même, la largeur du réservoir 1 peut diminuer en allant vers l'extrémité avant 17 afin de pouvoir positionner le réservoir 1 en évitant le passage de roue 7.

Il a été vu que ce réservoir 1 présente également l'avantage d'une part de respecter la zone d'intrusion du capot lors d'un choc piéton, et d'autre part de laisser le passage à des moyens d'outillage propre au montage et au démontage du support moteur, ou au montage et au démontage des circuits de freinage sur le maître cylindre 2.

## Revendications

1. Réservoir de liquide de frein (1) pour véhicule automobile, formé d'une partie inférieure (10) et d'une partie supérieure (11) soudées l'une à l'autre et comportant chacune au moins une nervure interne (21), la partie inférieure (10) du réservoir (1) étant montée sur le maître cylindre (2) d'un système de freinage, ce réservoir (1) comprenant un orifice de remplissage (18) par lequel du liquide peut être inséré, ce liquide s'étendant d'une part dans une première (13) et une deuxième (14) chambre de rétention du réservoir (1) qui communiquent entre elles et d'autre part dans une pipette d'alimentation (15, 16) propre à chaque chambre de rétention (13, 14) et dirigée vers le maître cylindre (2), **caractérisé en ce que** le réservoir (1) présente une forme sensiblement allongée dont l'extrémité avant (17) portant l'orifice de remplissage (18) est située en porte à faux du maître cylindre (2), et **en ce que** les nervures internes (21), après l'assemblage des deux parties (10) et (11), forment au moins un canal de remplissage (24) qui s'étend sensiblement horizontalement de l'orifice de remplissage (18) vers la première chambre de rétention (13).

2. Réservoir selon la revendication 1, **caractérisé en ce que** le fond du canal de remplissage (24) est situé à une hauteur supérieure à la hauteur du fond de la première chambre de rétention (13), de sorte que le liquide présent dans la première chambre de rétention (13) ne peut circuler dans le canal (24).

3. Réservoir selon la revendication (1) ou 2, **caractérisé en ce que** l'ouverture (29) aménagée entre le canal (24) et la première chambre de rétention (13) est orienté transversalement.

4. Réservoir selon l'une des revendications précédentes, **caractérisé en ce que** le canal de remplissage (24) présente un angle d'inclinaison par rapport à l'horizontal, de sorte que ce canal (24) soit horizontal lorsque le réservoir (1) est monté légèrement incliné sur le véhicule.

5. Réservoir selon l'une des revendications précédentes, **caractérisé en ce que** les nervures internes (21) forment, après l'assemblages des parties inférieures (10) et supérieures (11) du réservoir (1), au moins une cloison anti-mouvements (23) dans chaque chambre de rétention (13, 14), apte à adoucir la force des mouvements du liquide de frein.

6. Réservoir selon l'une des revendications précédentes, **caractérisé en ce que** l'orifice de remplissage (18) est réalisé sur la partie supérieure (11), et **en ce qu'**une butée de remplissage (31) est réalisée sur la partie inférieure (10) en regard de cet orifice (18).

7. Réservoir selon la revendication 6, **caractérisé en ce que** le point de contact entre un élément de pompage (33) externe du liquide et la butée de remplissage (31) est sensiblement au même niveau que l'extrémité (26) du canal de remplissage (24) débouchant sur la première chambre de rétention (13).

8. Réservoir selon l'une des revendications précédentes, **caractérisé en ce que** des moyens de renfort (19) sont placés entre le réservoir (1) et le maître cylindre (2).

9. Réservoir selon la revendication 8, **caractérisé en ce que** les moyens de renfort comprennent des nervures (19) réalisées sous la partie inférieure (10) du réservoir (1).

10. Réservoir selon l'une des revendications 8 et 9, **caractérisé en ce que** la longueur du réservoir (1) en porte à faux par rapport au maître cylindre (2) est telle que le support, moteur (5) est accessible.

11. Réservoir selon l'une des revendications précédentes, **caractérisé en ce que** l'orifice de remplissage (18) est muni d'un goulot (25) et d'un bouchon (30), ce goulot (25) et ce bouchon (30) présentant des dimensions telles que le capot avant peut s'affaisser sans contraintes lors d'un choc piéton.

12. Véhicule automobile, **caractérisé en ce qu'**il comporte un réservoir (1) selon l'une des revendications 1 à 11.

## Claims

1. Brake fluid reservoir (1) for an automobile, formed by a lower part (10) and an upper part (11) welded to each other and each including at least one internal rib (21), the lower part (10) of the reservoir (1) being mounted on the master cylinder (2) of a braking system, this reservoir (1) comprising a filling hole (18) through which fluid can be introduced, this fluid extending both into a first (13) and a second (14) retaining chamber of the reservoir (1) which communicate with each other and into a feed tube (15, 16) belonging to each retaining chamber (13, 14) and directed toward the master cylinder (2), **characterized in that** the reservoir (1) has a generally elongated shape of which the front end (17) carrying the filling hole (18) overhangs the master cylinder (2), and **in that** the internal ribs (21), after the two parts (10) and (11) are assembled, form at least one filling channel (24) which extends generally horizontally from the filling hole (18) to the first retaining chamber (13).

2. Reservoir according to Claim 1, **characterized in that** the bottom of the filling channel (24) is located at a higher level than the level of the bottom of the first retaining chamber (13), so that the fluid present in the first retaining chamber (13) cannot circulate in the channel (24).

3. Reservoir according to Claim 1 or 2, **characterized in that** the opening (29) arranged between the channel (24) and the first retaining chamber (13) is oriented transversely.

4. Reservoir according to one of the preceding claims, **characterized in that** the filling channel (24) is inclined at an angle in relation to the horizontal plane, so that this channel (24) is horizontal when the reservoir (1) is mounted slightly inclined on the vehicle.

5. Reservoir according to one of the preceding claims, **characterized in that** the internal ribs (21) form, after the lower (10) and upper (11) parts of the reservoir (1) are assembled, at least one anti-surge baffle (23) in each retaining chamber (13, 14), which is able to attenuate the force of the movements of the brake fluid.

6. Reservoir according to one of the preceding claims, **characterized in that** the filling hole (18) is made in the upper part (11), and **in that** a filling stop (31) is made on the lower part (10) opposite this hole (18).

7. Reservoir according to Claim 6, **characterized in that** the point of contact between an external fluid pumping element (33) and the filling stop (31) is generally at the same level as the end (26) of the filling channel (24) leading to the first retaining chamber (13).

8. Reservoir according to one of the preceding claims, **characterized in that** reinforcing means (19) are placed between the reservoir (1) and the master cylinder (2).

9. Reservoir according to Claim 8, **characterized in that** the reinforcing means comprise ribs (19) made underneath the lower part (10) of the reservoir (1).

10. Reservoir according to either of Claims 8 and 9, **characterized in that** the length of the reservoir (1) which overhangs in relation to the master cylinder (2) is such that the engine mounting (5) is accessible.

11. Reservoir according to one of the preceding claims, **characterized in that** the filling hole (18) is provided with a neck (25) and a cap (30), this neck (25) and this cap (30) having dimensions such that the hood can cave in without resistance in a pedestrian impact.

12. Automobile, **characterized in that** it includes a reservoir (1) according to one of Claims 1 to 11.

## Patentansprüche

1. Bremsflüssigkeitsbehälter (1) für ein Kraftfahrzeug, der von einem unteren Teil (10) und von einem oberen Teil (11) geformt wird, die aneinander geschweißt sind und je mindestens eine innere Rippe (21) aufweisen, wobei der untere Teil (10) des Behälters (1) auf den Hauptbremszylinder (2) eines Bremssystems montiert ist, wobei dieser Behälter (1) eine Füllöffnung (18) enthält, durch die Flüssigkeit eingefüllt werden kann, wobei diese Flüssigkeit sich einerseits in einer ersten (13) und einer zweiten (14) Rückhaltekammer des Behälters (1), die miteinander in Verbindung stehen, und andererseits in einer jeder Rückhaltekammer (13, 14) eigenen und zum Hauptbremszylinder (2) gerichteten Versorgungspipette (15, 16) ausbreitet, **dadurch gekennzeichnet, dass** der Behälter (1) eine im Wesentlichen längliche Form hat, deren vorderes, die Füllöffnung (18) tragendes Ende (17) vom Hauptbremszylinder (2) aus freitragend angeordnet ist, und dass die inneren Rippen (21) nach dem Zusammenbau der zwei Teile (10) und (11) mindestens einen Füllkanal (24) formen, der sich im Wesentlichen waagrecht von der Füllöffnung (18) zur ersten Rückhaltekammer (13) erstreckt.

2. Behälter nach Anspruch 1, **dadurch gekennzeichnet, dass** der Boden des Füllkanals (24) sich auf einer höheren Höhe als der Boden der ersten Rückhaltekammer (13) befindet, so dass die in der ersten Rückhaltekammer (13) vorhandene Flüssigkeit nicht in den Kanal (24) fließen kann.

3. Behälter nach Anspruch 1 oder 2, **dadurch gekennzeichnet, dass** die zwischen dem Kanal (24) und der ersten Rückhaltekammer (13) angeordnete Öffnung (29) quer ausgerichtet ist.

4. Behälter nach einem der vorhergehenden Ansprüche, **dadurch gekennzeichnet, dass** der Füllkanal (24) einen Neigungswinkel bezüglich der Waagrechten hat, derart, dass dieser Kanal (24) waagrecht ist, wenn der Behälter (1) leicht geneigt in das Fahrzeug montiert wird.

5. Behälter nach einem der vorhergehenden Ansprüche, **dadurch gekennzeichnet, dass** die inneren Rippen (21) nach dem Zusammenbau des unteren (10) und des oberen Teils (11) des Behälters (1) mindestens eine bewegungsverhindernde Trennwand (23) in jeder Rückhaltekammer (13, 14) bilden, die die Stärke der Bewegungen der Bremsflüssigkeit mildern kann.

6. Behälter nach einem der vorhergehenden Ansprüche, **dadurch gekennzeichnet, dass** die Füllöffnung (18) im oberen Teil (11) hergestellt ist, und dass ein Füllanschlag (31) im unteren Teil (10) gegenüber dieser Öffnung (18) hergestellt ist.

7. Behälter nach Anspruch 6, **dadurch gekennzeichnet, dass** der Kontaktpunkt zwischen einem äußeren Pumpelement (33) der Flüssigkeit und dem Füllanschlag (31) sich im Wesentlichen in gleicher Höhe befindet wie das Ende (26) des Füllkanals (24), das in die erste Rückhaltekammer (13) mündet.

8. Behälter nach einem der vorhergehenden Ansprüche, **dadurch gekennzeichnet, dass** Verstärkungseinrichtungen (19) zwischen dem Behälter (1) und dem Hauptbremszylinder (2) angeordnet sind.

9. Behälter nach Anspruch 8, **dadurch gekennzeichnet, dass** die Verstärkungseinrichtungen Rippen (19) enthalten, die unter dem unteren Teil (10) des Behälters (1) hergestellt sind.

10. Behälter nach einem der Ansprüche 8 und 9, **dadurch gekennzeichnet, dass** die freitragende Länge des Behälters (1) bezüglich des Hauptbremszylinders (2) derart ist, dass die Motorhalterung (5) zugänglich ist.

11. Behälter nach einem der vorhergehenden Ansprüche, **dadurch gekennzeichnet, dass** die Füllöffnung (18) mit einem Einfüllstutzen (25) und mit einem Deckel (30) versehen ist, wobei dieser Einfüllstutzen (25) und dieser Deckel (30) solche Abmessungen aufweisen, dass die Motorhaube bei einem Fußgängeraufprall ungehindert nachgeben kann.

12. Kraftfahrzeug, **dadurch gekennzeichnet, dass** es einen Behälter (1) nach einem der Ansprüche 1 bis 11 aufweist.
